# EUROPÄISCHE PATENTSCHRIFT

(11) **EP 2 046 480 B1**
(45) Veröffentlichungstag und Bekanntmachung des Hinweises auf die Patenterteilung: **27.04.2011**
(21) Anmeldenummer: 07787966.6
(22) Anmeldetag: 27.07.2007
(51) Int. Cl.: B01D 46/24, B01D 46/52, B01D 46/00, B01D 29/11, B01D 29/21

(54) **LUFTFILTERELEMENT MIT ABGEDECKTEN ENDSCHEIBEN**
AIR FILTER ELEMENT WITH COVERED END DISKS
ÉLÉMENT DE FILTRE À AIR À FLASQUES RECOUVERTS AUX EXTRÉMITÉS

(30) Priorität: 03.08.2006 DE 202006011989 U
(43) Veröffentlichungstag der Anmeldung: 15.04.2009
(73) Patentinhaber: MANN + HUMMEL GMBH, 71638 Ludwigsburg (DE)
(72) Erfinder: DWORATZEK, Klemens, 68535 Edingen (DE); BAUDER, Ralf, 68775 Ketsch (DE)
(86) Internationale Anmeldenummer: PCT/EP2007/057749
(87) Internationale Veröffentlichungsnummer: WO 2008/015165

(56) Entgegenhaltungen:
- EP-A- 0 048 608
- EP-A- 1 223 114
- DE-B- 1 062 675
- DE-C1- 19 529 618
- FR-A- 2 814 927
- GB-A- 2 318 525
- US-A- 3 360 120
- US-A- 4 321 139
- US-A- 4 507 199
- US-A- 4 865 731

## Beschreibung

### Technisches Gebiet

Die Erfindung betrifft ein Luftfilterelement mit einem zylinderrohrförmigen Filterbalg , der endseitig jeweils mit einer Endscheibe verschlossen ist, welche jeweils wenigstens eine Ringdichtung oder einen Ringdichtungsabschnitt eines Dichtungskörpers aufweist.

### Stand der Technik

Aus der US 4 507 199 A ist eine anschraubbare Schutzkappe für einen Ölwechselfilter bekannt.

Aus der FR 2 814 927 A ist der Verschluss eines Wechselfilters bekannt.

Aus der US 4 321 139 A ist ein verschließbares Behältnis mit einem Filter für biologische Proben bekannt.

Aus der GB 2 318 525 A ist ein steriler Filter bekannt, der durch Membrane geschützt wird und z.B. als Spritzenfilter einsetzbar ist.

Aus der EP 0 048 608 ist ein Flachfilter bekannt, der mittels einer Perforation auf einer Seite öffenbar und mittels einer Gießschale auf einer anderen Seite geschützt ist.

Aus der DE 195 29 618 C1 ist ein mit einer heraustrennbaren Frontplatte versehenes Rahmenfilter mit einem Stirnrahmen, der ein Filtermedium im Bereich des Aussenrandes staubdicht umschliesst, wobei die Frontplatte einstückig, jedoch trennbar, mit dem Stirnrahmen verbunden ist bekannt.

Aus der US 3 360 120 A ist ein Faltenfilter mit einer ablösbaren Abdeckung bekannt.

Endscheiben sind notwendig, um eine Abdichtung des Filterelements in einem Luftfiltergehäuse vornehmen zu können und den vorgesehenen radialen Strömungsweg durch den Filterbalg zu erzwingen. Wenigstens eine Endscheibe weist an der vom Filterbalg weg weisenden Außenseite einen ringförmigen Dichtungskörper auf. Der Dichtungskörper wird herkömmlich so hergestellt, dass die Endscheibe in eine Gießschale eingesetzt wird und dann ein flüssiger, polymerer Werkstoff eingefüllt wird, der in eine ringförmige Durchbrechung oder Vertiefung an der Endscheibe und/oder der Gießschale fließt. Nach dem Aushärten bzw. Vernetzen wird die Gießschale entfernt, so dass im Bereich des vorher vorhandenen Ringspalts eine Dichtungsfläche an der Endscheibe offen liegt.

Die dargestellte Fertigung ist jedoch aufwendig und entsprechend kostenintensiv. Aufgrund der Aushärtezeit bzw. Zeit zur Vernetzung des polymeren Werkstoffs wird bei der Serienfertigung von Filterelementen eine große Anzahl von Gießschalen benötigt. Sofern an der Endscheibe und/oder an dem Dichtungskörper Geometrieänderungen vorgenommen werden sollen, müssen sämtliche Gießschalen nachbearbeitet oder sogar neu gefertigt werden. Während des Herstellungsverfahrens müssen zudem beträchtliche Anstrengungen unternommen werden, um eine feste Anhaftung des aushärtenden polymeren Werkstoffs an der Gießschale zu vermeiden. Hierzu werden bei jedem Fertigungsvorgang Trennmittel auf den Bereich der Gießschale aufgebracht, der mit dem flüssigen Werkstoff in Kontakt kommt. Auch wird dieser Bereich zusätzlich mit einer Antihaftbeschichtung versehen. Verbleibende Anhaftungen an der Gießschale machen stets eine gründliche Reinigung nach einigen Fertigungszyklen erforderlich.

Am fertigen Filterelement liegt der ringförmige Dichtungskörper mit seiner Außenfläche frei, so dass er zur Vermeidung von Verschmutzungen und/oder Beschädigungen für den Transport bis zum Einbauort abgedeckt werden muss.

Schließlich besteht für den Endverbraucher das Problem, dass er in der Regel nicht erkennen kann, ob es sich um ein neues Originalteil des Herstellers handelt oder ob es sich um ein wieder aufbereitetes Ersatzteil handelt.

Eine erste Aufgabe der Erfindung besteht somit darin, die Fertigung von Filterelementen der eingangs genannten Art wirtschaftlicher durchführen zu können. Eine weitere Aufgabe besteht darin, einen Schutz des offen liegenden Dichtungskörpers zu bewirken und eine Siegelfunktion zu integrieren.

### Offenbarung der Erfindung

Diese Aufgaben werden bei einem Luftfilterelement mit den Merkmalen des Oberbegriffs des Anspruchs 1 dadurch gelöst, dass die Ringdichtung durch einen manuell entfernbaren Abdeckring abgedeckt ist und/oder dass eine zentrale Ausnehmung in der Endscheibe durch eine manuell entfernbare Abdeckscheibe abgedeckt ist.

Vorzugsweise ist der Abdeckring direkt über zwei konzentrische Schwächungslinien mit der Endscheibe verbunden. Eine angeformte oder sonst wie verbundene Abreißlasche ermöglicht es, den Abdeckring partiell zu lösen und dann entlang der Schwächungslinie abzuschälen, sodass der darunter liegende Dichtungskörper offen liegt und das Luftfilterelement in ein vorgesehenes Gehäuse eingebaut werden kann.

Möglich ist weiterhin, einen Folienring vorzusehen, der den Ringspalt in der Endscheibe überdeckt und an den benachbarten Randbereichen des Ringspalts angeklebt ist. Auch hier kann durch Abreißen des Abdeckrings der Dichtkörper freigelegt werden. Der Folienring kann aus Aluminiumfolien, Kunststofffolien oder Verbundwerkstoffen gebildet sein.

Der Abdeckring kann weiterhin durch ein in den Ringspalt der Endscheibe eingepresstes Zusatzteil gebildet sein, das insbesondere aus einem Kunststoff mit schlechten Haftungseigenschaften gebildet sein kann, beispielsweise aus Polyethylen, Polypropylen oder einem anderen Polyolefin. Andere Ausführungsführungsformen können angeclipste Abdeckringe umfassen.

Die Ringdichtung kann auch an einer Innenkante einer ringförmigen Endscheibe ausgebildet werden. In diesem Fall ist statt eines Abdeckrings eine Abdeckscheibe vorgesehen, die die gesamte zentrale Ausdehnung überdeckt. Ansonsten sind die gleichen Funktionen und Varianten gegeben wie bei der ringförmigen Abdeckung.

Durch alle Ausführungsformen wird der gewünschte Schutz für den Dichtkörper bewirkt und eine Siegelfunktion geschaffen. Zugleich wird mit einer erfindungsgemäß ausgebildeten Endscheibe bei einem Filterelement dessen Herstellung wesentlich vereinfacht.

Ein erfindungsgemäßes Verfahren zur Herstellung eines vorstehend beschriebenen Luftfilterelements sieht nämlich vor, auf Gießschalen vollständig zu verzichten. Hierdurch entfallen sämtliche Kosten für die Fertigung und Wartung der Gießschalen. Der elastomere Werkstoff wird direkt in die abgedeckten Ausnehmungen der Endscheibe gefüllt, wobei der im Betrieb des Filterelements offenen Ringspalt noch durch die erfindungsgemäß vorgesehenen Abdeckringe verschlossen ist. Der flüssige polymere Dichtungswerkstoff fließt so nur bis an den Abdeckring heran, kann aber aus der durch die Endscheibe selbst gebildeten Gießform nicht austreten. Die Rückseite des Abdeckrings bewirkt zugleich die Profilierung des Dichtkörpers, beispielsweise mit zusätzlichen Rillen, und wirkt somit als Matrize.

Ein alternatives Verfahren zur Herstellung eines Filterelements sieht vor, statt eines flüssigen polymeren Dichtungswerkstoffes die Endscheibe im Zweikomponenten-Spritzguss herzustellen. Dabei wird der Dichtungskörper aus einem thermoplastischen Elastomer ausgebildet. Hierfür fallen zwar wiederum Werkzeugkosten für die Herstellung an, jedoch werden der gewünschte Schutz des Dichtkörpers und die Siegelfunktion durch einen mit angespritztem Abdeckring bei diesem Herstellungsverfahren ebenfalls bewirkt.

Die Schwächungslinien zum späteren leichteren Abziehen des Abdeckrings können im Spritzgießverfahren mit angeformt werden.

Wird die nach der Erfindung gegebene Siegelfunktion nicht benötigt, sondern nur die gießschalenlose Herstellung angestrebt, so können die Abdeckringe auch während der Fertigung des Filterelements maschinell entfernt werden. Die Möglichkeit des manuellen Abreißens erleichtert nämlich auch ein automatisiertes Abreißen: so braucht lediglich die Abreißlasche durch einen ortsfesten Greifer festgehalten werden. Anschließend wird das Filterelement um seine Mittelachse rotiert, so dass der Abdeckring abreißt.

Der Abdeckring kann auch durch eine innen liegende kreisförmige Abdeckfläche erweitert sein, sodass sich eine vollständig geschlossene Abdeckscheibe ergibt, die zumindest an ihrer Außenkante mit dem Randbereich des Dichtungsringspalts verbunden ist und die bei Gebrauch des Filterelements vollständig abgezogen werden kann. Durch die Abdeckung des zentralen Bereichs ist auch der Bereich des Mittelrohrs am Filterelement verschlossen, sodass dieses zusätzlich vor eindringendem Schmutz geschützt ist. Die zusätzliche zentrale Abdeckung hat den weiteren Vorteil, dass mit einfachen Maßnahmen am Einbauort im Luftfiltergehäuse, wie beispielsweise mit einem Zentrierungsabsatz, auf den das Filterelement geschoben werden muss, erreicht wird, dass eine Benutzung des Filterelements nicht möglich ist, solange die Abdeckscheibe nicht entfernt ist.

### Kurze Beschreibung der Zeichnungen

Die Erfindung wird nachfolgend mit Bezug auf die Zeichnung näher erläutert.

- Fig. 1: ein Filterelement in perspektivischer Ansicht,
- Fig. 2: ein Filterelement in einem perspektivischen Längsschnitt,
- Fig. 3: ein Detail des Kopfbereichs des Filterelements gemäß Fig. 1,
- Fig. 4: ein Detail des Fußbereichs des Filterelements gemäß Fig. 1,
- Fig. 5: ein Schnittdetail des Kopfbereichs und
- Fig. 6: ein Schnittdetail des Fußbereichs.

### Ausführungsform(en) der Erfindung

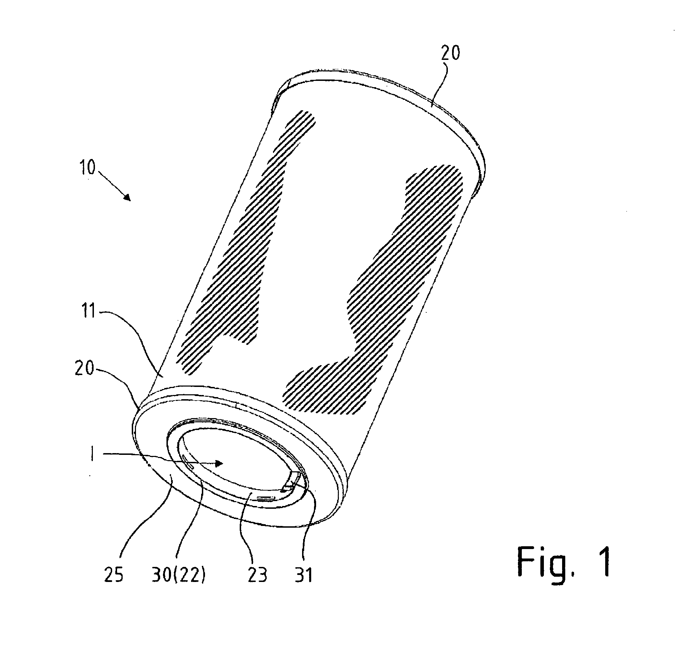

Fig. 1 zeigt ein Luftfilterelement 10 mit einem zylinderrohrförmigen Filterbalg 11 aus einem luftdurchlässigen Filtermedium. An beiden Stirnseiten sind jeweils Endscheiben 20 aufgesetzt und luftdicht mit dem Filterbalg 11 verbunden. Wenigstens eine der Endscheiben 20 ist, zumindest im Gebrauchszustand des Luftfilterelements 10, ringförmig ausgebildet, so dass ein zentraler innerer Strömungskanal I geöffnet ist.

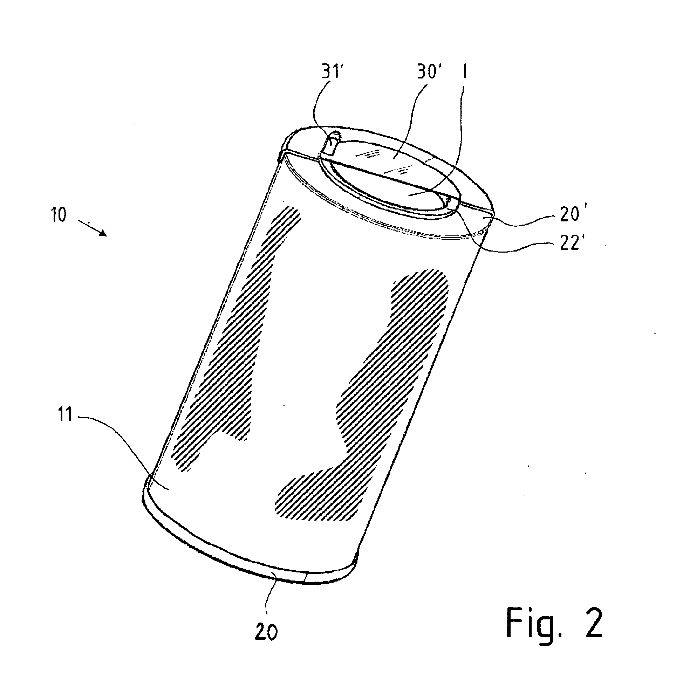

Fig. 2 zeigt ein Luftfilterelement 10 von der anderen Seite her. Dort ist ein Dichtungskörper 22' an einer Endscheibe 20' angeformt, der auch nach innen hin, zu einer zentralen Ausnehmung I hin eine Dichtungslippe aufweist. Mit dieser zentralen Öffnung wird das Filterelement 10 beispielsweise auf einen Zapfen in einem Luftfiltergehäuse aufgesetzt oder aufgeschraubt.

Die Endscheibe 20' ist durch eine Abdeckscheibe 30' vollständig überdeckt, wobei Figur 2 nur eine Hälfte der Abdeckscheibe 30' zeigt, um den dahinter liegenden Aufbau des Filterelements 10 besser darstellen zu können.

insbesondere ist auch der zentrale innere Strömungskanal I des Filterelements 10 überdeckt, sodass ein Einsetzen des Filterelements 10 in ein Luftfiltergehäuse nicht möglich ist, bevor nicht die Abdeckscheibe 30' entfernt ist. Hierzu ist die Abdeckscheibe 30' mit einer Abreißlasche 31' versehen, an der sie leicht gegriffen werden kann.

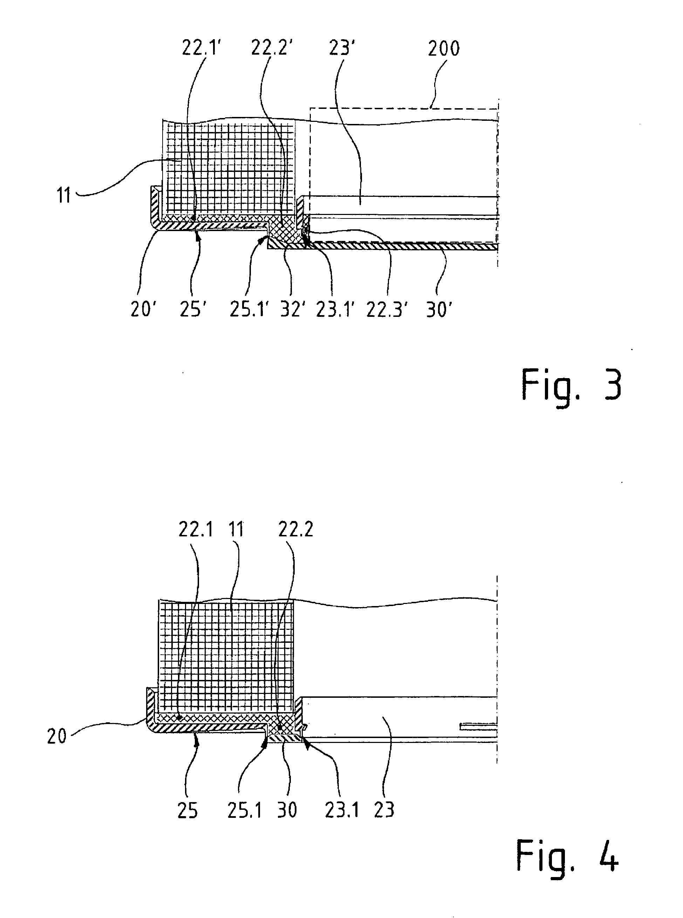

Fig. 3 zeigt im Detail die in Fig. 2 dargestellte Seite des Filterelements mit der Endscheibe 20', welche durch die Abdeckscheibe 30' überdeckt ist und mit dem Filterbalg 11 über den Dichtungskörper 22' verbunden, welcher neben Ringdichtungsabschnitten 22.2', 22.3', welche die eigentliche Dichtungsfunktion ausüben, auch noch einen Verbindungsbereich 22.1' besitzt. In dem Bereich 22.1' wird eine luftdichte Verbindung zwischen dem Filterbalg 11 und einem äußeren Ringbereich 25' der Endscheibe 20' hergestellt.

Der äußere Ringbereich 25' endet an einem Steg 25.1. Zur zentralen inneren Ausnehmung I hin hat die Endscheibe 20' einen zusätzlichen Ringabschnitt 23', der an der inneren Mantelfläche mit dem Ringdichtungsabschnitt 22.3', welcher Teil des Dichtungskörpers 22' ist, teilweise überdeckt ist. Die Abdeckscheibe 30' ist mit der Endscheibe 20' an der Spitze des Steges 25.1' verbunden. Die Wandstärke dieser Verbindungsstelle ist sehr dünn gehalten, um ein einfaches Abreißen von Hand zu erleichtern.

Ein profilierter Oberflächenbereich 32' der Abdeckscheibe 30' dient der Ausbildung einer Profiloberfläche an dem Ringdichtungsabschnitt 22.2' des Dichtungskörpers.

Fig. 4 zeigt die andere Seite des Filterelements 10, die zuvor in der perspektivischen Darstellung von Fig. 1 gezeigt worden ist. Der Dichtungskörper besitzt wiederum einen Verbindungsabschnitt 22.1 zur Verbindung der Endscheibe 20 mit dem Filterbalg 11 und einen Ringdichtungsabschnitt 22.2. Beabstandet zum äußeren Ringbereich 25 ist wiederum ein innerer Ringbereich 23 gegeben. Der zwischen den Bereichen 23, 25 bestehende Ringspalt ist durch den Ringdichtungsabschnitt 22.2 des Dichtungskörpers vollständig ausgefüllt. Die Ringdichtung 22.2 ist von einem Abdeckring 30 überdeckt, welcher mit Stegen 25.1, 23.1 über dünne Schwächungslinien mit der Endscheibe 20 verbunden ist, sodass wiederum ein einfaches Abreißen von Hand möglich ist. Die zum Dichtungskörper hin gewandte Oberfläche des Abdeckrings 30 ist profiliert ausgebildet, um die im Gebrauchszustand später nach außen weisende Oberseite der Ringdichtung 22.2 zu profilieren.

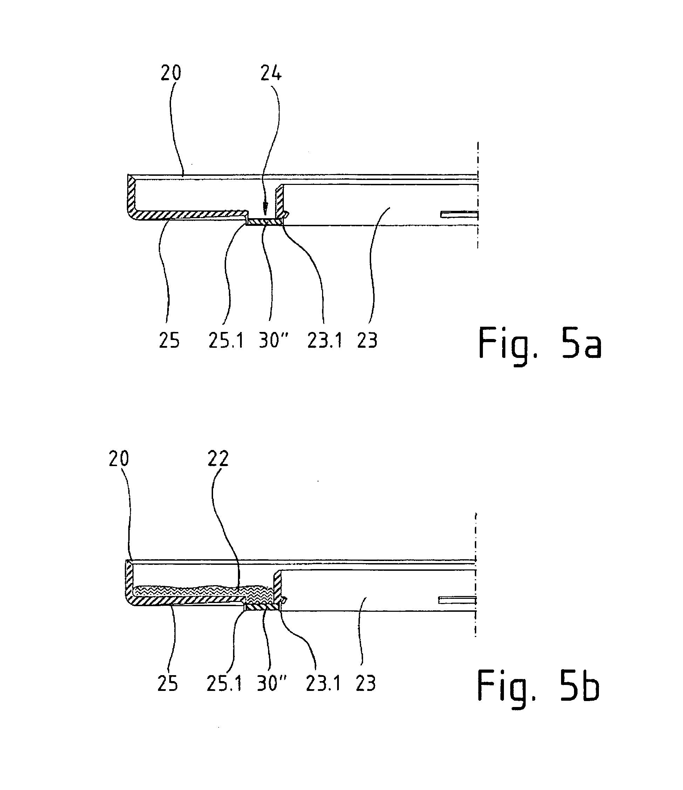

Die Herstellung eines erfindungsgemäßen Luftfilterelements 10 wird nachfolgend mit Bezug auf die Figuren 5a bis 5c näher erläutert:

Fig. 5a zeigt eine Endscheibe 20 entsprechend dem in Fig. 4 dargestellten Ausführungsbeispiel, die im Kunststoffspritzgießverfahren aus einem thermoplastischen Kunststoff hergestellt worden ist. Ein separater Abdeckring 30" wird in den Spalt zwischen dem äußeren Ringbereich 25 und dem inneren Ringbereich 23 eingepresst und verschließt diesen dann vollständig, sodass eine dichte Gießform aus der Endscheibe 20 und dem Abdeckring 30 gebildet ist, wie Fig. 5b zeigt.

Anschließend wird ein zur Ausbildung eines elastomeren Dichtungskörpers geeigneter Werkstoff in flüssiger oder pastöser Form in die so gebildete Gießform eingebracht, wobei der Ringspalt 24 zwischen den Stegen 23.1, 25.1 ausgefüllt ist und auch der äußere Ringbereich 25 überdeckt ist.

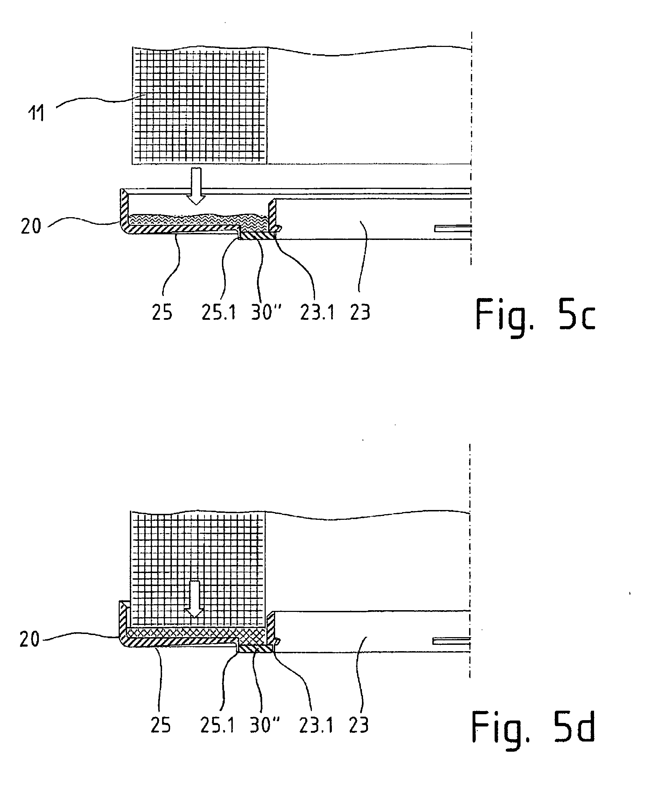

Der Filterbalg 11 wird dann (vgl. Fig. 5c) in die noch nicht ausgehärtete bzw. vernetzte Masse 22 gestellt, wodurch die Masse an der Unterseite des Filterbalgs anhaftet und dort gegebene Zwischenräume dicht abschließt. Nach dem Aushärten des elastomeren Werkstoffs ist dann gemäß Fig. 5d die eine Seite des Luftfilterelements 10 fertig gestellt.

Abschließend wird für die gegenüberliegende Seite am Filterbalg 11 eine weitere Endscheibe 20' so ausgerichtet, dass die später im Gebrauch nach außen weisende Oberfläche wieder nach unten zeigt und die innere Oberfläche nach oben geöffnet ist, sodass ein elastomerer Werkstoff eingefüllt werden und die noch freie Seite des Filterbalgs 11 dort hinein gestellt werden kann. Ein zentral zu positionierender Matrizenstempel 200 (vgl. Fig. 3) ist evtl. zusätzlich notwendig, um durch ein Gießverfahren einen als radiale Dichtung wirkenden Lippenabschnitt 22.3' ausbilden zu können. Hierfür reicht aber eine einfache Zylindergeometrie. Nach dem Aushärten bzw. Vernetzen ist das Filterelement 10 vollständig fertig gestellt.

## Patentansprüche

1. Luftfilterelement (10) mit einem zylinderrohrförmigen Filterbalg (11), der endseitig jeweils mit einer Endscheibe (20; 20') verschlossen ist, welche jeweils wenigstens eine Ringdichtung oder einen Ringdichtungsabschnitt (22.2, 22.2') eines Dichtungskörpers aufweist,
**dadurch gekennzeichnet, dass** die Ringdichtung durch einen entfernbaren Abdeckring (30; 30') abdeckt ist wobei der Abdeckring (30) über wenigstens zwei Schwächungslinien (23.1, 25.1) mit der Endscheibe (20) verbunden ist und/oder dass eine zentralen Ausnehmung in der Endscheibe (20; 20') durch eine entfernbare Abdeckscheibe (30') abgedeckt ist wobei die Abdeckscheibe (30') über wenigstens eine Schwächungslinie (25.1') mit der Endscheibe (20') verbunden ist..

2. Luftfilterelement (10) nach Anspruch 1 **dadurch gekennzeichnet, dass** der Abdeckring (30) durch einen Folienring gebildet ist

3. Luftfilterelement nach Anspruch 1, **dadurch gekennzeichnet, dass** die Abdeckscheibe durch einen Foliendeckel gebildet ist

4. Luftfilterelement (10) nach einem der Ansprüche 1 bis 3, **dadurch gekennzeichnet, dass** eine Abreißlasche (31) mit dem Abdeckring (30, 30") oder der Abdeckscheibe (30') verbunden ist.

5. Luftfilterelement (10) nach Anspruch 2 bis 4, **dadurch gekennzeichnet, dass** der Folienring oder der Foliendeckel aus einer Aluminiumfolie, einer Kunststofffolie oder Verbundwerkstoffen daraus gebildet ist.

6. Luftfilterelement (10) nach einem der Ansprüche 1 bis 5, **dadurch gekennzeichnet, dass** der Filterbalg (11) mit wenigstens einer Endscheibe (20, 20') über einen Verbindungsbereich (22.1') des Dichtungskörpers verbunden ist.

## Claims

1. Air filter element (10) with a cylinder-shaped filter bellows (11) which is closed on either side with an end plate (20; 20') which features at least one annular sealing or one annular sealing section (22.2; 22.2') each of a sealing body, **characterized in that** the annular sealing is covered by a removable cover ring (30; 30'), the cover ring (30) being connected via at least two lines of weakness (23.1, 25.1) with the end plate (20) and/or that a central recess in the end plate (20; 20') is covered by a removable cover plate (30'), the removable cover plate (30') being connected via at least one line of weakness (25.1') with the end plate (20').

2. Air filter element (10) according to claim 1, **characterized in that** the cover ring (30) is formed by a foil ring.

3. Air filter element according to claim 1, **characterized in that** the cover plate is formed by a foil cover.

4. Air filter element (10) according to one of the claims 1 to 3, **characterized in that** a pull-off latch (31) is connected with the cover ring (30; 30") or the cover plate (30').

5. Air filter element (10) according to claims 2 to 4, **characterized in that** the foil ring or the foil cover is made of an aluminum foil, a plastic foil or of composite materials thereof.

6. Air filter element (10) according to one of the claims 1 to 5, **characterized in that** the filter bellows (11) is connected with at least one end plate (20, 20') via a joining area (22.1') of the sealing body.

## Revendications

1. Elément de filtre à air (10) avec un soufflet de filtre en forme de tube cylindrique (11) obturé à chaque extrémité par une plaque d'extrémité (20 ; 20'), qui présente respectivement au moins un joint annulaire ou une section de joint annulaire (22.2, 22.2') d'un corps d'étanchéité, **caractérisé en ce que** le joint annulaire est recouvert d'une bague de recouvrement amovible (30 ; 30'), la bague de recouvrement (30) étant reliée sur au moins deux lignes d'affaiblissement (23.1, 25.1) à la plaque d'extrémité (20) et/ou qu'un évidement central prévu dans la plaque d'extrémité (20 ; 20') est recouvert d'une plaque de recouvrement amovible (30'), la plaque de recouvrement (30') étant reliée sur au moins une ligne d'affaiblissement (25.1') à la plaque d'extrémité (20').

2. Elément de filtre à air (10) selon la revendication 1, **caractérisé en ce que** la bague de recouvrement (30) est formée par une bague en film.

3. Elément de filtre à air selon la revendication 1, **caractérisé en ce que** la plaque de recouvrement est formée par un couvercle en film.

4. Elément de filtre à air (10) selon l'une des revendications 1 à 3, **caractérisé en ce qu'**une languette détachable (31) est reliée à la bague de recouvrement (30, 30") ou la plaque de recouvrement (30').

5. Elément de filtre à air (10) selon les revendications 2 à 4, **caractérisé en ce que** la bague en film ou le couvercle en film est faite/fait d'une feuille d'aluminium, d'une feuille plastique ou de matériaux composites.

6. Elément de filtre à air (10) selon l'une des revendications 1 à 5, **caractérisé en ce que** le soufflet de filtre (11) est relié à au moins une plaque d'extrémité (20, 20') sur une zone de jonction (22.1') du corps d'étanchéité.
